# EUROPEAN PATENT APPLICATION

(11) **EP 4 733 202 A1**
(43) Date of publication of application: **29.04.2026**
(21) Application number: 24208918.3
(22) Date of filing: 25.10.2024
(51) Int. Cl.: B64G 1/64

(54) **RELEASABLE CLAMPING DEVICE FOR CONNECTION AND SEPARATION OF TWO PARTS OF SPACE VEHICLES**

(71) Applicant: Occam Space, S.L., 28919 Leganés Madrid (ES)
(72) Inventor: Serrano Serrano, Manuel, 28919 Leganés (ES); García Guzmán, Francisco, 28919 Leganés (ES); Monte Álvarez, Pablo, 28919 Leganés (ES); Crespo Menéndez, Carlos, 28919 Leganés (ES); Sánchez Hezari, Victor Rashid, 28919 Leganés (ES)
(74) Representative: Mendigutía Gómez, Maria Manuela

(57) **Abstract**

Releasable clamping device for connection and separation of two parts of space vehicles, configured to releasably connect a first ring (1) associated to a first part and a second ring (2) associated to a second part. The device has an open circular band (4) and a plurality of clamps (6) coupled to the band (4) and slidable along said band (4), to clamp and release a flange (7) of the first ring (1) and the second ring (2), allowing the connection and separation of both rings (1,2), and a connector (9) to join and separate the ends (8) of the band (4). The band (4) further has rolling elements (10) placed between the band (4) and the clamps (6) and contacting said band (4) and clamps (6).

## Description

### Field of the invention

The present invention belongs to the aerospace field and spacecraft applications, specifically to connection and separation of different parts of space vehicles and applications based in ring joints for structures with symmetry of revolution, and more specifically to means for connections and separation between a launching vehicle and a spacecraft to be launched by said launching vehicle. The present invention relates to a releasable clamping device for connection and separation of two parts of space vehicles, which may apply for example to a launching vehicle and a satellite, including a circular band with clamps configured to clamp and release both parts.

### Background

In the technical field of the invention, aerospace field and spacecraft applications, regarding clamping devices for connection and separation between parts of the spacecrafts based in ring joints for structures with symmetry of revolution, one of the most effective systems used for joining and releasing large structures is the one referred as "Marman Clamp Band", where a set of wedges or V-shaped clamps are placed or preloaded against the interface rings of the structures to be joined, also V-shaped, by means of the action of an elastic band which is tightened around the clamps. This provides a solution with some sort of symmetry of revolution that optimizes the load transfer between both parts.

In the classical approach for this type of clamping device, the circumferential clamp is open in one or more locations, providing at least two ends, and these are the points where a bolted or similar joint is introduced.

This joint is the one responsible of introducing the needed tangential strain energy to the assembly.

One of the most important problems that is faced with this approach is that the friction between the clamps and the rings is responsible for a loss of uniformity in the tension around the clamp band and therefore a loss of uniformity in the radial preload, or pressure in the clamps. The longer the perimeter of the system, the bigger this effect is faced with.

One consequence of having a non-homogeneous preload along the ring is that the mechanical behaviour, especially stiffness and strength, is limited by the minimum level of preload achieved. Moreover, preload loss due to vibrations during launch phase is less controllable.

The most common solution to this problem is to introduce to the whole system a strain much higher than nominal strain needed to achieve the minimum required at the worst case location. Nevertheless, this has several drawbacks associated to overstress and high level strain. One of the negative effect results of introducing a much higher shock during the separation of the two parts.

Partial circumvention of this problem of non-uniform preload is achieved with the introduction of means to reduce friction, i.e. lubrication, or by applying the preload directly to the clamp by means of tightening bolts directly pushing the clamp through holes in the clamp band.

Both solutions offer some kind of improvement with respect to the classical approach but also create some drawbacks such as complex assembly procedures and uncertainties regarding the whole operation.

There are several documents that disclose current clamping devices for the connection and separation of two rings associated to different parts of space vehicles, for example a launching vehicle and a satellite:
Document EP0905022B1 discloses a system for attaching and separating satellites which comprises an open ring or metal band which has a channel formed in its inner perimeter, in which jaws are integrated in a discontinuous way, which can slide in the said channel, two end pieces fixed to the ends of the said ring, a tensioning bolt which joins the two end parts, and three supports for retaining the ring which are fixed to the structure of the launcher of a satellite. The invention can be applied to artificial satellites of any weight and size. This system solves the effect of frictions by implementing radial preload directly into the clamps but requires a complex adjustment process during clamp band integration thus, the results rely on the operator workmanship instead of in a robust design with simple process.

Document CN113772135A discloses a pneumatic shearing unlocking mechanism and application thereof, and belongs to the technical field of spaceflight; an upper docking ring is arranged above a lower docking ring, the upper end face of the upper docking ring is fixedly installed at the bottom of a satellite A, and the lower end face of the lower docking ring is fixedly arranged on the ground or a launching base; the lower portion of the outer wall of the upper butt-joint ring and the upper portion of the outer wall of the lower butt-joint ring are connected through a belting locking mechanism, a tension spring assembly is arranged between the bottom of the lower butt-joint ring and the belting locking mechanism, and a spring separation assembly is arranged on the upper portion of the inner wall of the lower butt-joint ring. By using the shearing mechanism for replacing an initiating explosive device, a separation task is executed without touch and impact. However, not even clamps are disclosed in the mechanism.

Document US2019322394A discloses a connecting-separating device for separating satellites from launchers or satellite dispensers. Circumferentially aligned clamps can be coupled on their inner face on rings of separable elements constituting the union interface between the two separable elements. A release mechanism connects two of the clamps through one of the ends of the clamps. The two clamps are connected by the release mechanism include a protrusion protruding from their outer faces at the end opposite the end connecting with the release mechanism. The rest of the clamps include a protrusion protruding from their outer faces at each of their ends adjacent the adjacent clamps, so that each pair of clamps adjacent and not connected to one another by the release mechanism are connected to one another by connectors connecting the protrusions. Nevertheless, the mechanism includes no means to reduce friction nor to apply preload to the clamping of the rings.

Document US2017341782A discloses a separation system for separable elements of spacecraft and launchers including an upper ring, a lower ring and a band with an inner channel which houses slidable clamps, which are applied against the upper ring and the lower ring that form the connection interface between the two separable elements. A device joins/separates the ends of the band, both the upper ring and the lower ring including an outer protruding element with a wedged section to be lodged in the clamps. The upper ring also has an inner protruding element with a wedged section that matches a channel shaped section in the lower ring, the lower ring also has an outer portion including the outer protruding element with a wedged section and the channel shaped section, the outer portion protruding from a main part of the lower ring and being spaced from it creating a groove. In this case the system also does not disclose means to reduce friction nor to apply preload to the band.

Document CN110239748A discloses an inter-satellite pyrotechnic separation device. The inter-satellite pyrotechnic separation device comprises an inter-satellite wrapping belt, a plurality of clamping blocks and guiding limiting mechanisms, wherein the inter-satellite wrapping belt is formed by annularly connecting two strip belts through pyrotechnic separation elements; the multiple clamping blocks are discretely fixed to the strip belts and located on the inner circumferential side of the inter-satellite wrapping belt and used for axially locking a butt-jointing ring of a next-level satellite and a butt-jointing ring of a before-level satellite.

Document US2012317753A discloses techniques for detachably joining a first component and a second component including a band clamp, a tensioning device, a plurality of shoes, and a plurality of brackets. The band clamp is configured to cause the plurality of shoes to engage an abutting cylindrical flange of each of the first component and the second component and to provide a sufficient clamping pressure to join the first component with the second component. Again, the band does not disclose means to reduce friction nor to apply preload.

Documents US2004156673A and US2003099510A disclose an apparatus for releasably interconnecting structural components with two structural components having a rotational symmetry relative to a central longitudinal axis, being releasably connected to each other by a clamping mechanism which engages two interface rings secured to the respective structural component. The clamping mechanism is formed by tensioning elements held together by at least one, preferably two straps. A lock with two hinged tensioning levers holds the strap or straps releasably together.

Document US2007080260A discloses a launcher and satellite connection-separation apparatus comprising a band with an inner channel in which a plurality of clamps are located in a sliding manner, which clamps are applied on the rings making up the joining interface between both vehicles, means for radially tightening the band-clamps assembly and a union-separation device of the ends thereof including, together with locking and unlocking means, a mechanism allowing a controlled opening of the band in two phases. No means to reduce friction nor to apply preload disclosed.

It is therefore desirable a clamping device for connection and separation of two parts of space vehicles avoiding the drawbacks of the conventional current clamping devices.

### Description of the invention

The present invention overcomes the drawbacks of the current clamping means for connection and separation of parts in space vehicles by means of a releasable clamping device for connection and separation of two parts of space vehicles.

The releasable clamping device of the invention is configured to releasably connect a first ring associated to a first part and a second ring associated to a second part of space vehicles. The first part and the second part may specifically be respectively a launching vehicle and a spacecraft, for example a satellite to be launched by said launching vehicle, although they may refer to other parts of space vehicles, as for example two satellites, a satellite set and a launching vehicle, etc.

The releasable clamping device has an open circular band with at least two ends, and a plurality of clamps coupled to the open circular band and slidable along said open circular band, configured to clamp together and release a flange or protruding element of the first ring and the second ring, allowing therewith the connection and separation of both parts associated to the rings, for instance the launching vehicle and the satellite. These clamps are in contact with both rings making up the joining interface between them and providing with a separation plane. This configuration provides a locking mechanism for the joint of both parts, for instance the launching vehicle and satellite, and by its own design allows unlocking of the joint.

Additionally, the clamping device of the invention has a connector configured to join and separate the at least two ends of the band. This connector is connected to activation means, which are configured to activate the connector to separate the at least two ends of the band, the band being opened along the diameter thereof, allowing the clamps to be released from the rings and allowing therewith the separation of first part from second part.

The releasable clamping device has a plurality of rolling elements placed between the band and the clamps, said rolling elements contacting the clamps and the band, guaranteeing contact pressures and rolling characteristics ensuring long life and very low frictions. These rolling elements diminish by more than two-fold the effect of friction on the conversion of tangential strain energy to radial force or preload in the clamps.

With accord to a particular embodiment, the open circular band has a channel in which the rolling elements are placed. According to an alternative embodiment, the clamps have a channel in which the rolling elements are placed. Therefore, with accordance to the present invention, the rolling elements might be placed directly between the band and the clamps, or alternatively might be placed in a channel, which may be included in the band, or in the clamps.

Particularly, the rolling elements may be housed in a cage, which is configured to keep the relative position of the rolling elements between the clamps and the band. So, according to the previous embodiments stated above, the cage housing the rolling elements might be placed directly between the band and the clamps, or alternatively the cage might be placed in a channel, which may be included in the band, or in the clamps.

According to the configuration of the device, the band introduces tangential strain energy that is transmitted to the clamps as radial force or preload of the clamps, and the clamps restrain the position and the movement of both rings by direct contact. This transformation of tangential strain energy in the band to radial force or preload in the clamps is performed by the plurality of rolling elements placed between the band and the clamps, which allows independent tangential movement of the band with respect to the clamp avoiding the effect of friction. The introduction of these rolling elements ensures the homogeneity of strain energy distribution along the length of the band, and therefore homogeneity of the preload in all the clamps of the device.

Moreover, this reduction of friction does not have an impact into the load capability of the device. This characteristic of the device is only dependent on the friction coefficient between the surfaces of clamps and interfaces of the rings associated to each part, and the radial preload on the clamps.

The configuration disclosed above ensures a minimum dispersion in terms of tension all around the band, minimizing the maximum tension found in the band and minimizing the energy to be stored for a required line load capability. The position of clamps, band and rolling elements is secured by means of a dedicated and specific geometry, and no possible accidental disassembly can happen once the clamp band system has been correctly manufactured, assembled on the interface of the parts, and tested.

During installation of the device, the band is positioned so the clamps are centred with respect to the interface formed by the two rings and tension is applied to the band.

The clamping device of the present invention provides and even and regular distribution of the strain energy, providing a uniform preload all around the assembly. The configuration obtained is the one having the least possible energy and hence will produce the least possible shock if suddenly released.

With accord to a preferred embodiment of the invention, the rolling elements are made of hardened stainless steel, although other materials may be used, provided they fulfil the hardness, strength and resilience requirements.

According to particular embodiments of the invention, the cage may be made of metal or a low friction polymer, although other different materials may be used.

Particularly, the rolling elements are cylinders, and preferably said cylinders are placed parallel to the band axis. However, another orientation of the rolling elements is possible, and even another shape, for example the rolling elements being spherical, or any body of revolution. Regarding to this particular embodiment, the revolution axis of the rolling elements could preferably be placed parallel to the revolution axis of the band.

The features, functions and advantages that have been discussed can be achieved independently in various embodiments or may be combined in yet other embodiments. Further details can be seen with reference to the following description and drawings.

### Brief description of the drawings

Next, in order to facilitate the comprehension of this disclosure, in an illustrative rather than limitative manner a series of embodiments with reference to a series of figures shall be made below.

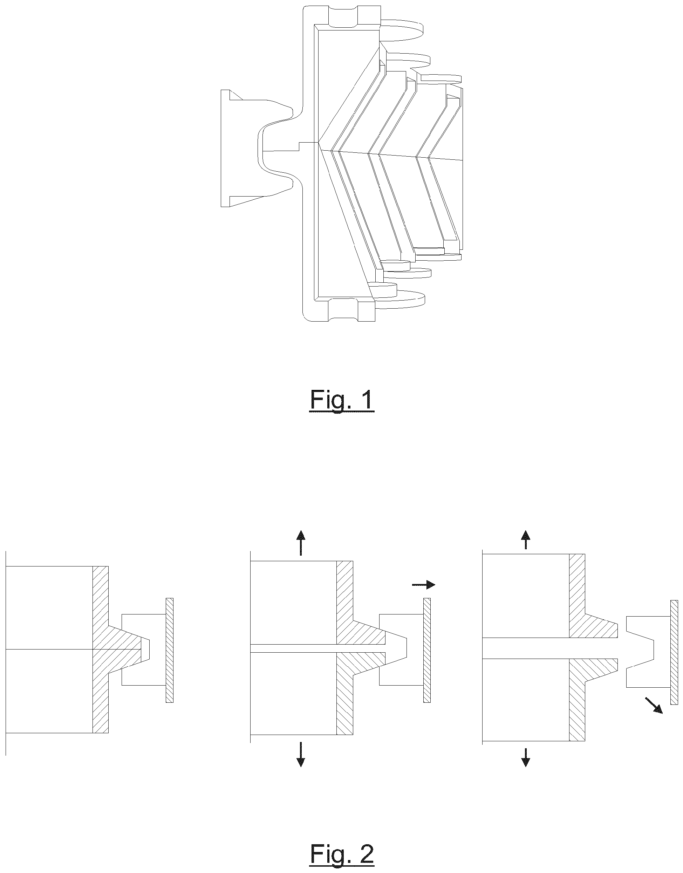

Figure 1 shows a schematic perspective view of two parts of space vehicles, specifically a launching vehicle and a spacecraft, connected by means of a current conventional clamping device.
Figure 2 shows a schematic sequential diagram of the clamping device of figure 1 performing the separation of both parts.
Figure 3 is a perspective view of a particular embodiment of a releasable clamping device of the present invention.
Figure 4 is a schematic perspective view of two parts of space vehicles connected by means of the releasable clamping device of figure 3.

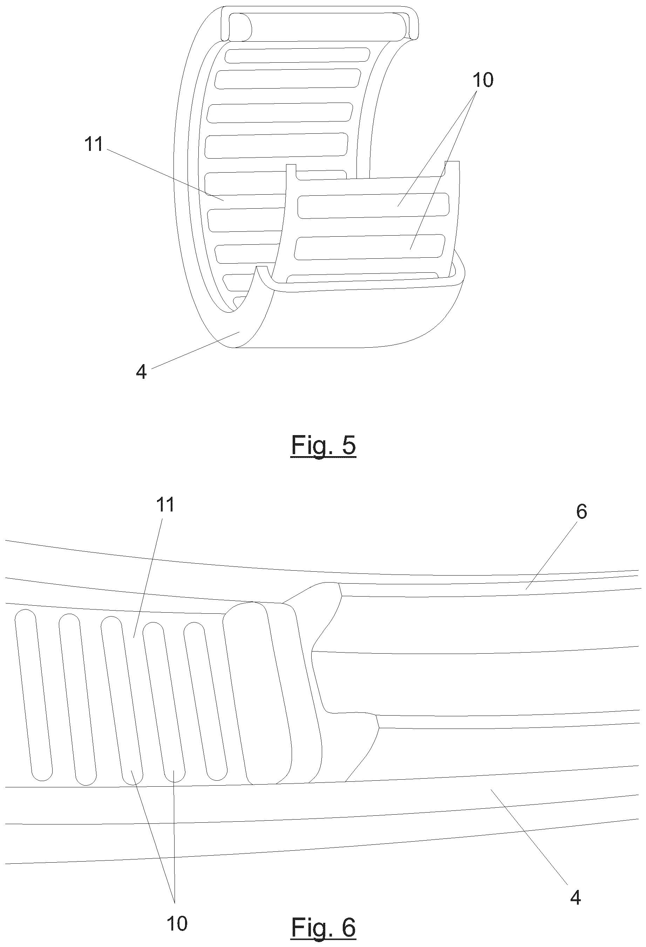

Figure 5 is a partial perspective view showing a section of the band of the clamping device of figures 3 and 4, including rolling elements housed in a cage placed in the inner channel of the band.
Figure 6 is a partial perspective view showing a section of the band of the clamping device of figures 3, 4 and 5, including rolling elements housed in a cage placed in the inner channel of the band, and a clamp contacting said rolling elements.
Figure 7 is a comparative view showing schematically friction and radial pressure in a conventional clamping device (7a) and in an embodiment of a clamping device of the present invention (7b), in which for the sake of clarity, the clamps are not depicted, but only the band and the rolling elements.

These figures refer to the following set of elements:
- 1.: first ring
- 2.: second ring
- 3.: clamping device
- 4.: band
- 5.: inner channel of the band
- 6.: clamps
- 7.: flange of the rings
- 8.: ends of the band
- 9.: connector
- 10.: rolling elements
- 11.: cage

### Detailed description

The present disclosure refers to a releasable clamping device for connection and separation of two parts of space vehicles.

As it can be seen in the figures, the clamping device 3 of the invention has an open circular band 4 with at least two ends 8, which is configured to releasably connect a first ring 1 associated to a first part and a second ring 2 associated to a second part of space vehicles. The first part and the second part may specifically be respectively a launching vehicle and a spacecraft, for example a satellite to be launched by the launching vehicle, although they might be any other parts of space vehicles.

The releasable clamping device has additionally a plurality of clamps 6 coupled to the open circular band 4 and slidable with respect to said open circular band 4, configured to clamp together and release when necessary, a flange 7 or protruding element of the first ring 1 and a flange 7 or protruding element of the second ring 2, allowing therewith the connection and separation of both parts associated to the rings 1,2, for example the launching vehicle and the satellite. The clamps 6 contact with both rings 1,2 making up the joining interface between them.

The clamping device 3 of the invention has a connector 9 configured to join and separate the at least two ends 8 of the band 4. This connector 9 is connected to activation means, which are configured to activate said connector 9 to separate the at least two ends 8 of the band 4 releasing the clamping device 3 from the rings 1,2 and allowing therewith the separation of first part from second part.

The releasable clamping device has a plurality of rolling elements 10 placed between the band 4 and the clamps 6, the rolling elements 10 contacting the clamps 6 and the band 4 to provide a sliding solution, providing contact pressures and rolling characteristics ensuring very low friction.

According to a particular embodiment of the invention disclosed in the figures, the open circular band 4 has a channel 5 in which the rolling elements 10 are placed. According to an alternative embodiment, the clamps 6 have a channel in which the rolling elements 10 are placed. So, with accordance to different embodiments of the invention, the rolling elements 10 might be placed directly between the band 4 and the clamps 6, or alternatively might be placed in a channel 5, which might be included in the band 4, or in the clamps 6.

Further, and according to particular embodiments, the rolling elements 10 may be housed in a cage 11, to keep the relative position of the rolling elements 10 between the clamps 6 and the band 4. So, according to the previous embodiments stated above, the cage 11 housing the rolling elements 10 might be placed directly between the band 4 and the clamps 6, or alternatively the cage 11 might be placed in a channel 5, which might be included in the band 4, as shown in the figures, or in the clamps 6.

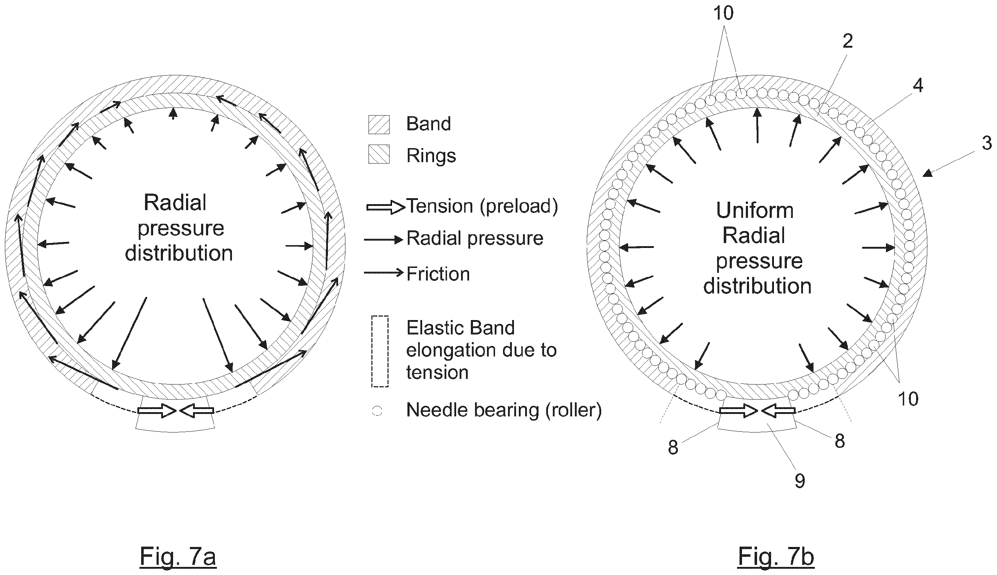

As stated previously, due to the configuration of the clamping device 3, the band 4 introduces tangential strain energy transmitted to the clamps 6 as radial force or preload, said clamps 6 restraining the position and the movement of both rings 1,2 by direct contact. This transformation of tangential strain energy in the band 4 to radial force or preload in the clamps 6 is achieved by the rolling elements 10 placed between the band 4 and the clamps 6, which allows independent tangential movement of the band 4 with respect to the clamp 6 preventing the effect of friction. The introduction of the rolling elements 10 ensures the homogeneity of strain energy distribution along the length of the band 4, and therefore homogeneity of the preload in all the clamps 6 of the device 3. Figure 7 shows comparatively friction and radial pressure in a conventional clamping device, drawing 7a, and in a clamping device 3 according to the present invention, drawing 7b.

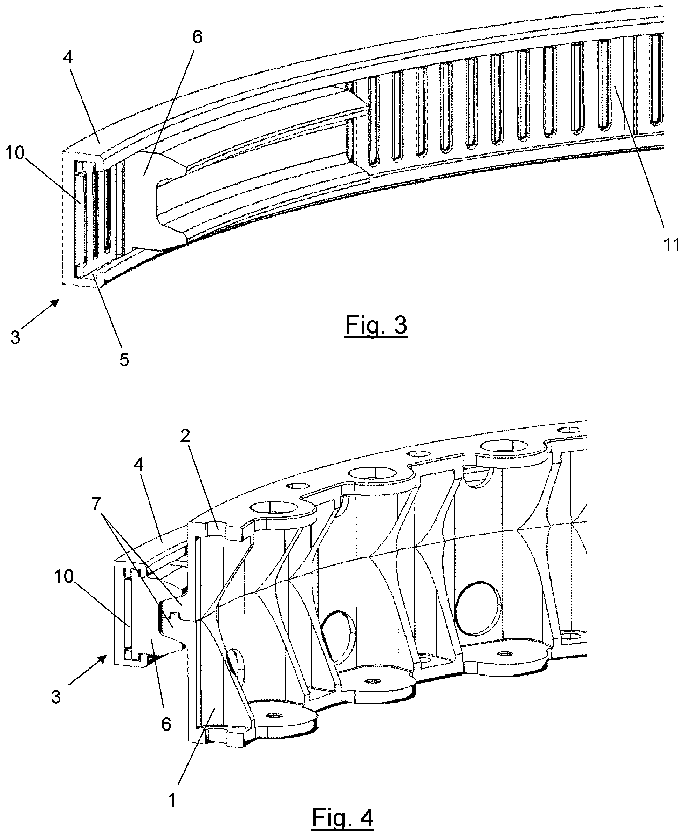

As stated above, and shown in figure 4, during installation of the clamping device 3, the band 4 is positioned so the clamps 6 are centred with respect to the interface formed by the two rings 1,2 and tension is applied to the band 4.

The clamping device 1 of the present invention provides and even and regular distribution of the strain energy, providing a uniform preload all around the assembly, as shown in figure 7, drawing b. The configuration obtained is the one having the least possible energy and hence will produce the least possible shock if suddenly released.
With accord to a preferred embodiment of the invention, the rolling elements 10 are typically made of hardened stainless steel, although other different materials may be used.

According to a particular embodiment, the cage 11 may be made of metal or a low friction polymer, although other different materials may be used.
Particularly, the rolling elements 10 are bodies of revolution, typically cylinders, and preferably said cylinders 10 are placed parallel to the band 4 axis as shown in the figures. However, any other orientation of the rolling elements is possible, and even another shape, for example the rolling elements 10 being spherical.

## Claims

1. - Releasable clamping device for connection and separation of two parts of space vehicles, configured to releasably connect a first ring (1) associated to a first part and a second ring (2) associated to a second part of space vehicles, and comprising
- an open circular band (4) with at least two ends (8), - a plurality of clamps (6) coupled to the open circular band (4) and slidable along said open circular band (4), configured to clamp and release a flange (7) of the first ring (1) and the second ring (2) allowing the connection and separation of both rings (1,2), and
- a connector (9) configured to join and separate the at least two ends (8) of the band (4), connected to activation means configured to activate said connector (9) to separate the at least two ends (8) of the band (4), the band (4) being opened along the diameter thereof and releasing the clamping device (1) from the rings (1,2) and allowing separation of first part from second part,
the releasable clamping device **characterized in that** it comprises a plurality of rolling elements (10) placed between the band (4) and the clamps (6), the rolling elements (10) contacting said clamps (6) and band (4).

2. Releasable clamping device for connection and separation of two parts of space vehicles, according to claim 1, wherein the band (4) comprises a channel (5) in which the rolling elements (10) are placed.

3. Releasable clamping device for connection and separation of two parts of space vehicles, according to claim 1, wherein the clamps (6) comprise a channel (5) in which the rolling elements (10) are placed.

4. Releasable clamping device for connection and separation of two parts of space vehicles, according to any of the previous claims, wherein the rolling elements (10) are housed in a cage (11).

5. - Releasable clamping device for connection and separation of two parts of space vehicles, according to any of the previous claims, wherein the rolling elements (10) are made of hardened stainless steel.

6. - Releasable clamping device for connection and separation of two parts of space vehicles, according to any of the previous claims, wherein the cage (11) is made of a material selected from metal and polymer.

7. - Releasable clamping device for connection and separation of two parts of space vehicles, according to any of the previous claims, wherein the rolling elements (10) are bodies of revolution.

8. - Releasable clamping device for connection and separation of two parts of space vehicles, according to claim 6, wherein the revolution axis of the rolling elements (10) are placed parallel to the revolution axis of the band (4).
